# EUROPEAN PATENT APPLICATION

(11) **EP 2 684 662 A1**
(43) Date of publication of application: **15.01.2014**
(21) Application number: 12754635.6
(22) Date of filing: 02.03.2012
(51) Int. Cl.: B29C 33/20

(54) **MOLDING MACHINE**

(30) Priority: 08.03.2011 JP 2011050791
(71) Applicant: Sumitomo Heavy Industries, Ltd., Tokyo 141-6025 (JP)
(72) Inventor: NAKAZAKI, Osamu, Yokosuka-shi Kanagawa 237-8555 (JP); YAMAMOTO, Taizo, Yokosuka-shi Kanagawa 237-8555 (JP)
(74) Representative: HOFFMANN EITLE
(86) International application number: PCT/JP2012/055461
(87) International publication number: WO 2012/121173

(57) **Abstract**

The present invention is related to a molding unit which includes a fixed member and a movable member that move relatively in a predetermined direction; a constructive featured portion that is formed on one of the fixed member and the movable member and in a predetermined pattern in the predetermined direction; a detector that is provided on another one of the fixed member and the movable member and detects the predetermined pattern of the constructive featured portion; and a position detector that detects a position of the movable member based on the predetermined pattern detected by the detector.

## Description

### Technical Field

The present invention is related to a molding machine.

### Background Art

In an injection molding machine according to prior art, resin is filled from an injection nozzle of an injection unit such that the resin is filled in a cavity between a stationary mold and a movable mold, and the resin is solidified to be a molding product. A mold clamping unit is provided that performs opening and closing operations of a mold by moving the movable mold with respect to the stationary mold.

There is a hydraulic mold clamping unit that is driven by supplying oil to a hydraulic cylinder and an electric mold clamping unit that is driven with an electric motor. The electric mold clamping unit is widely used because its controllability and energy efficiency are high and it does not soil surroundings. In this case, thrust is generated by a ball screw which is rotated by driving the electric motor, and the thrust is increased by a toggle mechanism to generate a great clamping force.

However, according to the electric mold clamping unit, because it uses the toggle mechanism, it is difficult to change the clamping force because of characteristics of the toggle mechanism. Thus, response and stability are poor, and the clamping force cannot be controlled during a molding process. For this reason, a mold clamping unit is proposed which enables the thrust generated by the ball screw to be used directly as a mold clamping force. In this case, the clamping force can be controlled during a molding process because a torque of the electric motor is proportional to the clamping force.

However, according to the electric mold clamping unit of prior art, there are problems such that the load capacity of the ball screw is low, a great clamping force cannot be generated and the clamping force varies due to a torque ripple generated in the electric motor. Further, in order to generate the clamping force, it is necessary to always supply current to the electric motor, which increases a power consumption value and a heating value. Correspondingly, it becomes necessary to increase a rated power of the electric motor, which increases cost of the molding machine.

Therefore, a mold clamping unit is contemplated that uses a linear motor for mold opening and closing operations and an attraction force of an electromagnet for clamping operation of the mold (see Patent Document 1, for example).
[Patent Document 1] International Publication Pamphlet No. WO05/090052

### Disclosure of Invention

### Problem to be Solved by Invention

In the case of using the linear motor for the mold opening and closing operations, it is necessary to perform a position control with high accuracy with the linear motor to prevent a collision between a mold on a movable side and a mold on a stationary side and damage due to the collision. For this reason, an optical linear encoder is used as a position transducer. However, there are problems that such a linear scale is expensive and its mounting is difficult. With respect to its mounting, in particular, it is necessary to mount a scale body and a scale head on one of the movable side and the stationary side, respectively such that they are close to each other. However, a movable range (movement distance) at the time of the mold opening and closing operations is relatively great, and it is difficult to mount the scale body and the scale head such that they don't have interference over such a movable range.

Further, not only for the mold clamping unit that uses the linear motor but also for other mold clamping unites (the electric mold clamping unit, for example), it is useful to detect a position of the movable side at the time of the mold opening and closing operations using such a configuration that is relatively easy to mount and inexpensive. Further, it is useful to detect a position of an injection unit at the time of moving the injection unit using such a configuration that is relatively easy to mount and inexpensive.

Therefore, an object of the present invention is to provide a molding machine that implements a position detecting function with a configuration that is relatively easy to mount and inexpensive.

### Means to Solve the Problem

According to one aspect of the invention, a molding machine that uses a linear motor is provided that includes a constructive featured portion that is formed on one of a fixed member and a movable member and in a predetermined pattern in the predetermined direction; a detector that is provided on another one of the fixed member and the movable member and detects the predetermined pattern of the constructive featured portion; and a controller that controls, based on the predetermined pattern detected by the detector, the position of the movable member during the mold opening and closing operations.

### Advantage of the Invention

According to the present invention, a molding machine can be obtained that implements a position detecting function with a configuration that is relatively easy to mount and inexpensive.

### Brief Description of Drawings

Fig. 1 is a diagram for illustrating a mold unit and a mold clamping unit in a closed status according to an embodiment of the present invention.
Fig. 2 is a diagram for illustrating a mold unit and a mold clamping unit in a opened status according to an embodiment of the present invention.
Fig. 3 is a diagram for schematically illustrating a configuration of a position detector 100 according to an embodiment.
Fig. 4 is a diagram for schematically illustrating a magnetic flux density change pattern (output) of a magnetometric sensor 104 according to a movement amount of a movable platen 12.
Fig. 5 is a diagram for schematically illustrating a configuration of a position detector 200 according to another embodiment.
Fig. 6 is a diagram for schematically illustrating a magnetic flux density change pattern (output) of a magnetometric sensor 204A according to a movement amount of a movable platen 12.
Fig. 7 is a diagram for schematically illustrating a configuration of a position detector 300 according to another embodiment.
Fig. 8 is a diagram for schematically illustrating a configuration of a position detector 400 according to another embodiment.
Fig. 9 is a diagram for illustrating an example of a mold unit and a mold clamping unit in a molding machine according to an embodiment of the present invention.
Fig. 10 is a diagram for illustrating another example of a mold unit and an injection unit in a molding machine according to an embodiment of the present invention.

Description of Reference Symbols
- Br1: bearing member
- Fr: frame
- Gd: guide
- 10: clamping unit
- 11: stationary platen
- 12: movable platen
- 13: rear platen
- 14: tie bar
- 15: stationary mold
- 16: movable mold
- 17: injection unit
- 18: injection nozzle
- 19: mold unit
- 22: attraction plate
- 28: linear motor
- 29: stator
- 31: mover
- 33: magnetic pole teeth
- 34: mover core
- 35: windings
- 37: electromagnetic unit
- 39: center rod
- 39a: periphery surface portion
- 39b, 39c: recess row
- 41: hole
- 45: slot
- 46: core
- 47: yoke
- 48: windings
- 49: electromagnet
- 51: attraction portion
- 55: load detector
- 60: controller
- 61: mold opening/closing process part
- 62: mold clamping process part
- 100, 200, 300, 400: position detector
- 102, 202, 302, 402: permanent magnet
- 104, 304, 404: magnetometric sensor
- 204A, 204B: magnetometric sensor
- 306: sloped surface
- 406: recess row

### Best Mode for Carrying Out the Invention

In the following, the best mode for carrying out the present invention will be described in detail by referring to the accompanying drawings. It is noted that, in the present embodiment, with respect to the mold clamping unit, a forward direction corresponds to a moving direction of a movable platen at the time of the mold closing, and a backward direction corresponds to a moving direction of the movable platen at the time of the mold opening. Further, with respect to the injection unit, a forward direction corresponds to a moving direction of a screw at the time of the injection, and a backward direction corresponds to a moving direction of the screw at the time of the plasticizing.

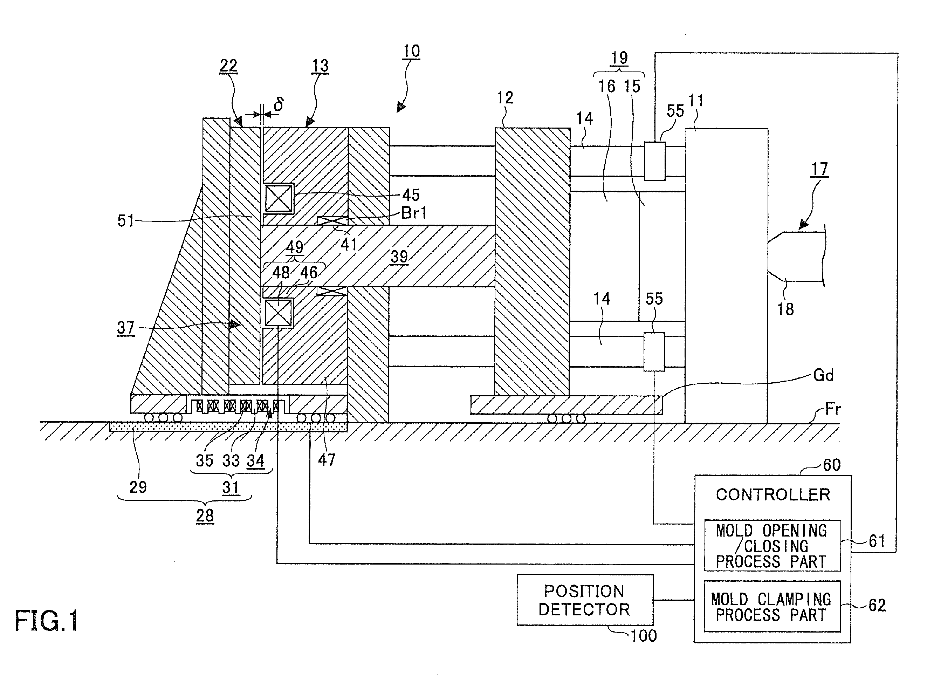

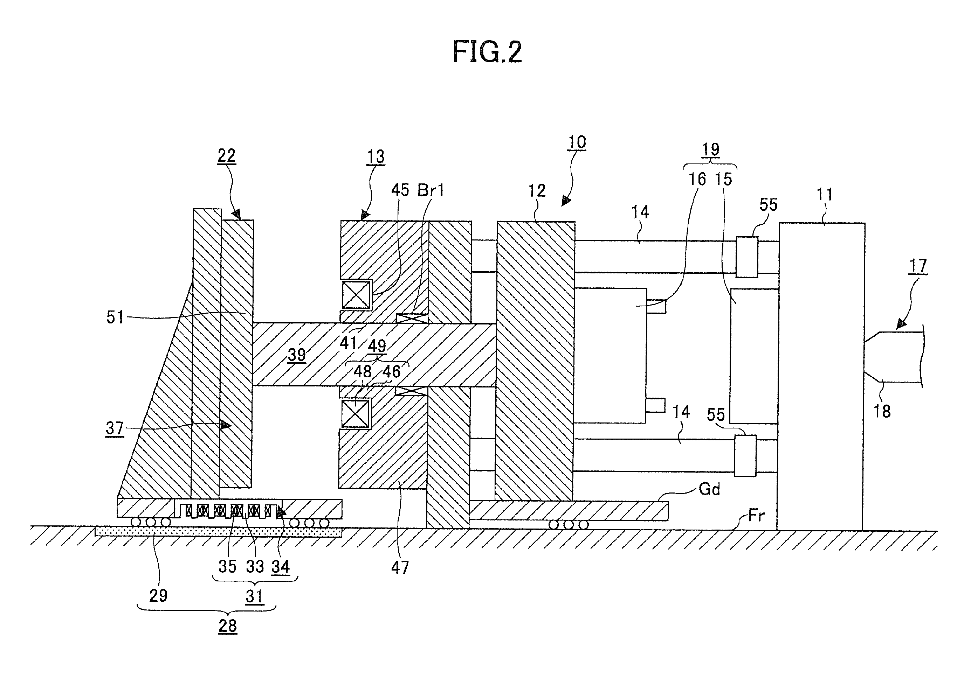

Fig. 1 is a diagram for illustrating a mold closed status of a mold unit and a mold clamping unit of a molding machine according to an embodiment of the present invention, and Fig. 2 is a diagram for illustrating a mold opened status of the mold unit and the mold clamping unit of the molding machine according to the embodiment of the present invention.

In Figs. 1 and 2, a reference numeral 10 indicates a mold clamping unit, Fr indicates a frame (chassis) of the injection molding machine, Gd indicates a guide which is movable with respect to the frame Fr, and a reference numeral 11 indicates a stationary platen which is provided on a guide (not shown) or the frame Fr. A rear platen 13 is provided such that it is opposed to the stationary platen with a predetermined spacing. Four tie bars 14 (only two tie bars are illustrated in the drawings) extend between the stationary platen 11 and the rear platen 13. It is noted that the rear platen 13 is fixed with respect to the frame Fr.

A movable platen 12 is provided such that it is opposed to the stationary platen 11 along the tie bars and movable in a mold opening/closing direction. For this reason, the movable platen 12 is fixed to the guide Gd, and openings are formed in the movable platen 12 such that the tie bars pass through the openings or notches. It is noted that to the guide Gd is fixed to an attraction plate 22.

Further, a stationary mold (die) 15 is fixed to the stationary platen 11 and a movable mold 16 is fixed to the movable platen 12. Movements of the movable platen in a forward or backward direction cause the stationary platen 11 and the movable mold 16 to come close to each other or come apart from each other, and thus the mold closing, the mold clamping and the mold opening are performed. As the mold clamping is performed, a cavity space (not illustrated) is formed between the stationary mold 15 and the movable mold 16, and the cavity space is filled with a resin (not illustrated) injected from an injection nozzle of the injection unit 17. Further, a mold unit 19 is configured by the stationary mold 15 and the movable mold 16.

The attraction plate 22 is fixed to the guide Gd such that it is parallel to the movable platen 12. With this arrangement, the attraction plate 22 is capable of moving in the forward and backward directions at the back of the rear platen 13.

A linear motor 28 is provided on the guide Gd for moving the movable platen 12 in the forward and the backward directions. The linear motor 28 includes a stator 29 and a mover 31. The stator 29 is provided on the frame Fr such that it is parallel to the guide Gd and extends over a moving range of the movable platen 12. The mover 31 is provided at the lower end of the movable platen 12 such that it is opposed to the stator 29 and extends over a predetermined range.

The mover 31 includes a mover core 34 and windings 35. The mover core 34 includes plural magnetic pole teeth 33 which are formed with a predetermined spacing and are projected toward the stator 29. The windings 35 are wound around the respective magnetic pole teeth 33. It is noted that the magnetic pole teeth 33 are formed in a direction perpendicular to the moving direction of the movable platen 12 such that they are parallel to each other. The stator 29 includes a stator core (not illustrated), and permanent magnets (not illustrated) which are provided on the stator core. The permanent magnet is formed by performing magnetization of the respective magnetic poles of North and South alternately. When the linear motor 28 is driven by supplying a predetermined current to the windings 35, the mover 31 is moved in the forward or backward direction, which causes the movable platen 12 to be moved in the forward or backward direction by the guide Gd, thereby enabling the mold closing or the mold opening.

It is noted that, in the embodiment, the permanent magnet is provided in the stator 29 and the windings 35 are provided in the mover 31; however, a permanent magnet may be provided in a stator and windings may be provided in a mover. In this case, since the windings are not moved when the linear motor 28 is driven, wiring for supplying the electric power to the windings can be installed easily.

It is noted that instead of fixing the movable platen 12 and the attraction plate 22 to the guide Gd, the mover 31 of the linear motor 28 may be provided in the movable platen 12 or the attraction plate 22. Further, instead of using the linear motor 28, a hydraulic actuator, an electric motor, etc, may be used.

When the movable platen 12 is moved in the forward direction and the movable mold 16 is abutted against the stationary mold 15, the mold closing is performed and then the mold clamping is performed. An electromagnetic unit 37 for performing the mold clamping is provided between the rear platen 13 and the attraction plate 22. Further, a center rod 39, which extends through the rear platen 13 and the attraction plate 22 and connects the movable platen 12 and the attraction plate 22, is provided such that it can be moved in the forward and backward directions. The center rod 39 moves the attraction plate 22 in the forward and backward directions in synchronization with the moving of the movable platen 12 in the forward and backward directions at the time of the mold closing and the mold opening. The center rod 39 transmits the mold clamping force generated by the electromagnetic unit 37 to the movable platen 12 at the time of the mold clamping.

It is noted that the mold clamping unit 10 is configured by the stationary platen 11, the movable platen 12, the rear platen 13, the attraction plate 22, the linear motor 28, the electromagnetic unit 37, the center rod 39, etc.

The electromagnetic unit 37 includes an electromagnet 49 formed in the rear platen 13 and an attraction portion 51 formed in the attraction plate 22. The attraction portion 51 is formed on a predetermined portion of a front end surface of the attraction plate 22. In the illustrated embodiment, the predetermined portion surrounds the center rod 39 at the position of the attraction plate 22 and is opposed to the electromagnet 49. Further, a slot 45 is formed at a predetermined part of the rear end surface of the rear platen 13. The predetermined part is around the center rod 39 in the embodiment. A core (inner magnetic pole) 46 is formed at the inner side of the slot 45 and a yoke (outer magnetic pole) 47 is formed at the outer side of the slot 45. A winding 48 is wound around the core 46 in the slot 45. It is noted that the core 46 and the yoke 47 are formed integrally as a casting; however, the core 46 and the yoke 47 may be formed as a laminated electromagnet steel sheet by laminating thin plates made of a ferromagnetic substance.

It is noted that in the embodiment the electromagnet 49 may be provided independently from the rear platen 13 and the attraction portion 51 may be provided independently from the attraction plate 22. Further, the electromagnet 49 may be a part of the rear platen 13 and the attraction portion 51 may be a part of the attraction plate 22. Further, a positional relationship between the electromagnet and the attraction portion may be reversed. For example, the electromagnet 49 may be provided in the attraction plate 22 and the attraction portion may be provided in the rear platen 13.

When a current is applied to the winding 48 in the electromagnetic unit 37, the electromagnet 49 is driven to attract the attraction force, thereby generating a clamping force.

The center rod 39 is coupled to the attraction plate 22 at its rear end portion and is coupled to the movable platen 12 at its front end portion. Thus, the center rod 39 is moved in the forward direction together with the movable platen to move the attraction plate 22 in the forward direction at the time of the mold closing, and is moved in the backward direction together with the movable platen to move the attraction plate 22 in the backward direction at the time of the mold opening. For this reason, a hole 41 through which the center rod 39 passes is formed at the center of the rear platen 13, and a bearing member Br1 such as a bushing for slidably supporting the center rod 39 is provided in a front end portion of the hole 41.

The driving of the linear motor 28 and the electromagnet 49 of the mold clamping unit 10 is controlled by a controller 60. The controller 60 includes a CPU, a memory, etc. The controller 60 also includes a circuit for applying the current to the windings 35 of the linear motor 28 and the winding 48 of the electromagnet 49 according to calculation results of the CPU. The controller 60 is coupled to a load detector 55. The load detector 55 is provided at a predetermined location of at least one tie bar 14 (a predetermined location between the stationary platen 11 and the rear platen 13) of the mold clamping unit 10 to detect a load applied to the tie bar 14. In the illustrated example, two load detectors 55 are provided on two tie bars 14 which are located on upper and lower sides. The load detector 55 is a sensor for detecting an elongation of the tie bar 14, for example. The load detected by the load detector 55 is transmitted to the controller 60. Further, the controller 60 is coupled to a position detector 100 described hereinafter. It is noted that the illustration of the controller 60 is omitted in Fig. 2.

Next, the operation of the mold clamping unit 10 is described.

A mold closing process is controlled by a mold opening/closing process part 61. In a status (i.e., a mold opening status) illustrated in Fig. 2, the mold opening/closing process part 61 supplies the current to the windings 35 to drive the linear motor 28. At that time, the mold opening/closing process part 61 determines the position of the movable platen 12, based on information from a position detector described hereinafter, to drive the linear motor 28 until the movable platen 12 moves forward to a predetermined forward position (position control of the movable platen 12). At the predetermined forward position, as illustrated in Fig. 1, the movable platen 12 is abutted against the stationary mold 15. At that time, a gap δ is formed between the rear platen 13 and the attraction plate 22, that is to say, between the electromagnet 49 and the attraction portion 51. It is noted that the force required for the mold closing is sufficiently less than the mold clamping force.

Then, a mold clamping process part 62 of the controller 60 controls a mold clamping process. The mold clamping process part 62 supplies the current to the winding 48 to attract the attraction portion 51 with the attraction force of the electromagnet 49. Accordingly, the mold clamping force is transmitted to the movable platen 12 via the attraction plate 22 and the center rod 39, and thus the mold clamping is performed. When the mold clamping process part 62 changes the mold clamping force, such as at the time of stating the mold clamping, it performs such control that the current of a stationary value required to generate a target mold clamping force to be obtained by the change, that is to say, a target mold clamping force in a stationary status is supplied to the winding 48.

It is noted that the mold clamping force is detected by the load detector 55. The detected mold clamping force is transmitted to the controller 60 where a feedback control is performed by adjusting the current to be supplied to the winding 48 such that the mold clamping force follows a setting value. During this period, the resin melted in the injection unit 17 is injected from the injection nozzle 18 and the respective cavity spaces of the mold unit 19 are filled with the resin.

When the resin in the cavity spaces is cooled to be solidified, the mold opening/closing process part 61 controls a mold opening process. The mold clamping process part 62 stops supplying the current to the winding 48 in the status illustrated in Fig. 1. Accordingly, the mold opening/closing process part 61 starts to drive the linear motor 28. At that time, the mold opening/closing process part 61 determines the position of the movable platen 12, based on information from a position detector described hereinafter, to drive the linear motor 28 until the movable platen 12 moves backward to a predetermined backward position (position control of the movable platen 12). At the predetermined backward position, movable mold 16 is apart from the stationary mold 15, thereby the mold opening is implemented.

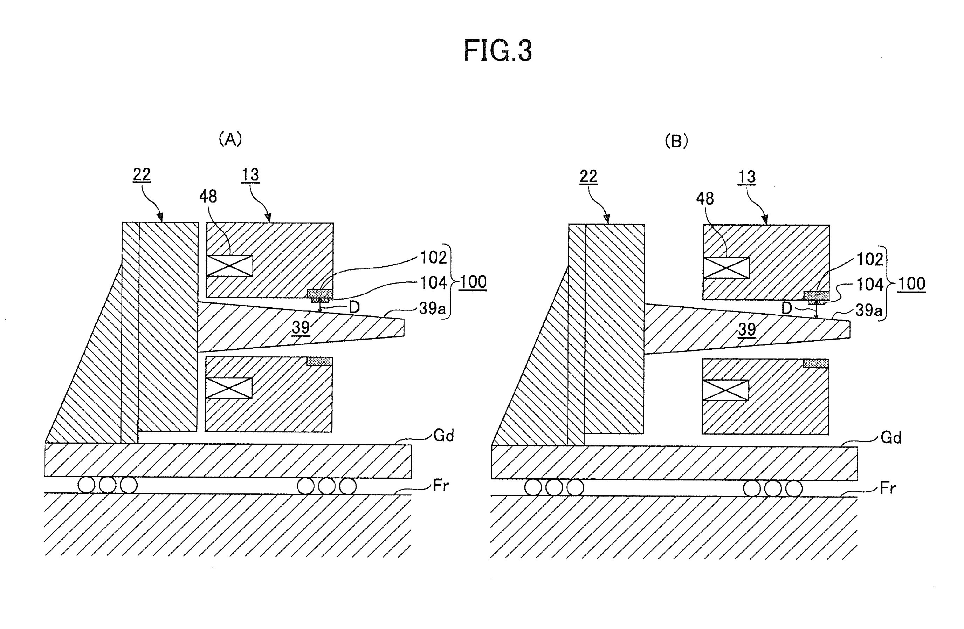

Next, with reference to Figs. 3 through 10, features of the present invention are described.

Fig. 3 is a diagram for schematically illustrating a configuration of a position detector 100 according to an embodiment. It is noted that, in Fig. 3, for the sake of convenience for explaining the position detector 100, only a main part of the molding machine illustrated in Figs. 1 and 2 is schematically illustrated. Further, in Figs. 1 and 2, in terms of preventing complexity of the drawings, configurations of the position detector 100 described hereinafter are not illustrated. In Fig. 3, (A) illustrates a status (mold closed status) in which the movable platen 12 is in the predetermined forward position, and (B) illustrates a status (mold opened status) in which the movable platen 12 is in the predetermined backward position.

The position detector 100 according to the embodiment illustrated in Fig. 3 includes a permanent magnet 102, a magnetometric sensor 104 and a periphery surface portion 39a of the center rod 39 that is formed from a magnetic material. The permanent magnet 102 is provided on the side of the rear platen 13 such that the permanent magnet 102 surrounds the periphery surface portion 39a of the center rod 39. The magnetometric sensor 104 is provided on the side of the rear platen 13 such that the magnetometric sensor 104 is adjacent to the permanent magnet 102. The magnetometric sensor 104 may be of any type, including a Hall sensor, a MR sensor, etc. The periphery surface portion 39a of the center rod 39 has a slope formed therein with respect to the opposing surface on the side of the rear platen 13, as illustrated in Fig. 3. In other words, the periphery surface portion 39a of the center rod 39 is configured such that a distance D with respect to the permanent magnet 102 on the opposing surface on the side of the rear platen 13 varies along a mold opening/closing direction (left and right directions in the drawing).

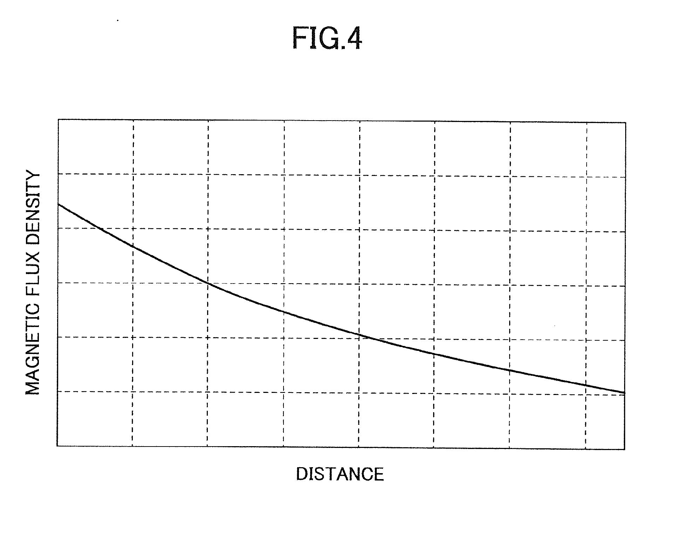

Because the center rod 39 moves together with the movable platen 12 at the time of the mold opening and closing operations as described above, the distance D between the periphery surface portion 39a of the center rod 39 and the permanent magnet 102 changes as the movable platen 12 moves. When the distance D between the periphery surface portion 39a of the center rod 39 and the permanent magnet 102 changes, a magnetic flux density detected by the magnetometric sensor 104 changes correspondingly. In other words, the magnetic flux density detected by the magnetometric sensor 104 changes in a pattern corresponding to a change pattern of the distance D between the periphery surface portion 39a of the center rod 39 and the permanent magnet 102 (see Fig. 4). In Fig. 4, a lateral axis indicates a movement amount of the movable platen 12 (an original point corresponding to a status in which the movable platen 12 is at the predetermined backward position), and a vertical axis indicates the magnetic flux density detected by the magnetometric sensor 104. As illustrated in Fig. 4, there is such a tendency that the magnetic flux density becomes smaller as the distance D between the periphery surface portion 39a of the center rod 39 and the permanent magnet 102 becomes greater (i.e., as the movable platen 12 comes closer to the predetermined forward position for the mold closing illustrated in (B) in Fig. 3). Thus, by deriving, in advance, a relationship between the movement distance of the movable platen 12 (and thus the position of the movable platen 12) and the change pattern of the magnetic flux density, it becomes possible to detect the position of the movable platen 12.

It is noted that, in the embodiment illustrated in Fig. 3, the permanent magnet 102 and the magnetometric sensor 104 are provided on the side of the rear platen 13 and the sloped surface (periphery surface portion 39a) is provided on the side of the center rod 39; however, it may be opposite. Specifically, the sloped surface may be provided on the side of the rear platen 13 and the permanent magnet 102 and the magnetometric sensor 104 may be provided on the side of the center rod 39. Further, the periphery surface portion 39a of the center rod 39 is sloped in an upward direction to the side of the attraction plate 22; however, the direction of the slope may be opposite. Specifically, the periphery surface portion 39a of the center rod 39 may be sloped in an upward direction to the side of the movable platen 12.

Further, according to the embodiment illustrated in Fig. 3, the permanent magnet 102 and the magnetometric sensor 104 are provided near the end of the rear platen 13 on the side of the movable platen 12; however, the permanent magnet 102 and the magnetometric sensor 104 may be provided at any positions that are opposed to the periphery surface portion 39a of the center rod 39.

Further, according to the embodiment illustrated in Fig. 3, a constructive featured portion (i.e., the slope in the illustrated embodiment) of the center rod 39 is detected by the magnetometric sensor 104; however, the constructive featured portion of the center rod 39 may be detected with any non-contact distance sensors based on other detection principles (an eddy current displacement gauge, a laser displacement gauge, an capacitance type displacement gauge, etc., for example).

According to the embodiment illustrated in Fig. 3, only by performing working for forming the constructive featured portion (i.e., the slope) on the periphery surface portion 39a of the center rod 39, does it become possible to detect the position using the magnetometric sensor 104 which is inexpensive. Further, the magnetometric sensor 104 is easier to mount in comparison with a linear encoder, and the position control can be performed after deriving, based on the change pattern of the magnetic flux density that is actually detected by the mounted magnetometric sensor 104, the relationship between the movement distance of the movable platen 12 (and thus the position of the movable platen 12) and the change pattern of the magnetic flux density. Thus, high working accuracy and mounting accuracy are not required.

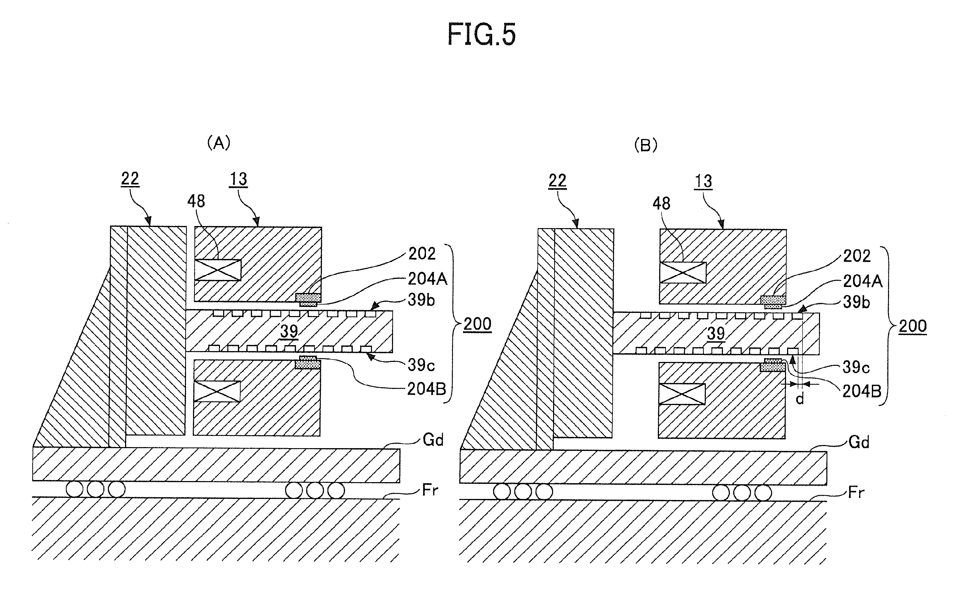

Fig. 5 is a diagram for schematically illustrating a configuration of a position detector 200 according to another embodiment. It is noted that, in Fig. 5, for the sake of convenience for explaining the position detector 200, only a main part of the molding machine illustrated in Figs. 1 and 2 is schematically illustrated. Further, in Figs. 1 and 2, in terms of preventing complexity of the drawings, configurations of the position detector 200 described hereinafter are not illustrated. In Fig. 5, (A) illustrates a status (mold closed status) in which the movable platen 12 is in the predetermined forward position, and (B) illustrates a status (mold opened status) in which the movable platen 12 is in the predetermined backward position.

The position detector 200 according to the embodiment illustrated in Fig. 5 includes a permanent magnet 202, magnetometric sensors 204A, 204B and recess rows 39b, 39c that are formed on the periphery surface portion of the center rod 39 that is formed from a magnetic material. The permanent magnet 202 is provided on the side of the rear platen 13 such that the permanent magnet 202 surrounds the periphery surface portion 39a of the center rod 39. The magnetometric sensors 204A and 204B are provided on the side of the rear platen 13 such that the magnetometric sensors 204A and 204B are adjacent to the permanent magnet 202. The magnetometric sensors 204A and 204B may be of any type, including a Hall sensor, a MR sensor, etc. The magnetometric sensors 204A and 204B may be provided such that the magnetometric sensors 204A and 204B are diagonally opposite to each other when viewed along an axis direction, as illustrated in Fig. 5. The magnetometric sensors 204A and 204B are provides such that the magnetometric sensors 204A and 204B are opposed to the recess rows 39b and 39c formed on the periphery surface portion of the center rod 39, respectively. The recess rows 39b and 39c each are configured by a plurality of recesses spaced uniformly (uniform pitch) along the mold opening/closing direction (left and right directions in the drawing). The recess rows 39b and 39c may be formed such that there is a phase shift with respect to each other along the mold opening/closing direction, as illustrated in (B) in Fig. 5. The phase shift amount d may be asymmetrical with respect to spacing (pitch) between the respective recesses of the recess row 39b, for example. The phase shift amount d may be other than a half of the pitch, such as a quarter of the pitch, for example.

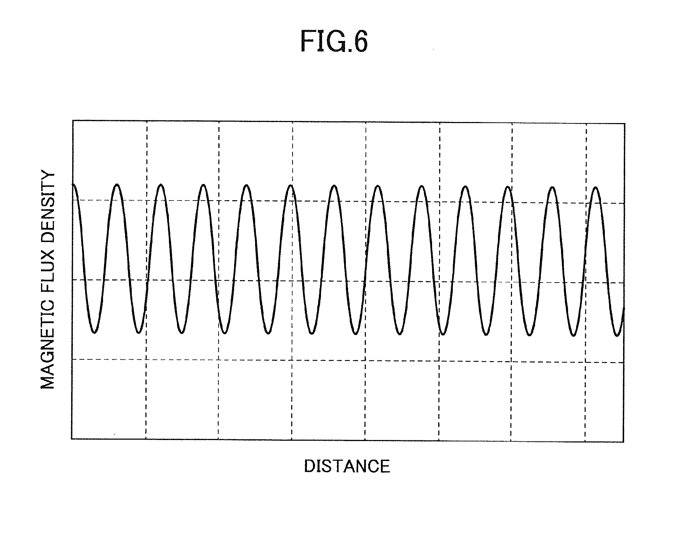

As is the case with the embodiment illustrated in Fig. 3, because the center rod 39 moves together with the movable platen 12 at the time of the mold opening and closing operations as described above, the distance between the periphery surface portion 39a of the center rod 39 and the permanent magnet 202 changes due to the recess rows 39b and 39c as the movable platen 12 moves. In Fig. 6, a lateral axis indicates a movement amount of the movable platen 12 (an original point corresponding to a status in which the movable platen 12 is at the predetermined backward position), and a vertical axis indicates the magnetic flux density detected by the magnetometric sensor 204A. As illustrated in Fig. 6, if a single pair of a projection and a depression (a depression and a projection next to it in the recess row 39b, for example) passes by the magnetometric sensor 204A, a single sine wave form appears in the output of the magnetometric sensor 204A. Thus, by forming a plurality of the pairs of the projection and the depression, it becomes possible to increase a positional resolution. Further, in the embodiment illustrated in Fig. 5, because the recess rows 39b and 39c are arranged with a phase shift as described above, the outputs of the magnetometric sensors 204A and 204B become phase shifted sine waves, which enables determining the direction of travel (forward or backward) of the movable platen 12.

It is noted that, in the embodiment illustrated in Fig. 5, the permanent magnet 202 and the magnetometric sensors 204A and 204B are provided on the side of the rear platen 13 and the recess rows 39b and 39c are provided on the side of the center rod 39; however, it may be opposite. Specifically, the recess rows 39b and 39c may be provided on the side of the rear platen 13 and the permanent magnet 202 and the magnetometric sensors 204A and 204B may be provided on the side of the center rod 39.

Further, according to the embodiment illustrated in Fig. 5, the permanent magnet 202 and the magnetometric sensors 204A and 204B are provided near the end of the rear platen 13 on the side of the movable platen 12; however, the permanent magnet 202 and the magnetometric sensors 204A and 204B may be provided at any positions that are opposed to the recess rows 39b and 39c of the center rod 39.

Further, according to the embodiment illustrated in Fig. 5, constructive featured portions (i.e., the recess rows 39b and 39c in the illustrated embodiment) of the center rod 39 are detected by the magnetometric sensors 204A and 204B; however, the constructive featured portions of the center rod 39 may be detected with any non-contact distance sensors based on other detection principles (an eddy current displacement gauge, a laser displacement gauge, an capacitance type displacement gauge, etc., for example).

According to the embodiment illustrated in Fig. 5, only by performing working for forming the constructive featured portions (i.e., the recess rows 39b and 39c) on the periphery surface portion 39a of the center rod 39, does it become possible to detect the position using the magnetometric sensors 204A and 204B which are inexpensive. Further, the magnetometric sensor 204 is easier to mount in comparison with a linear encoder, and the position control can be performed after deriving, based on the change patterns of the magnetic flux density that are actually detected by the mounted magnetometric sensors 204A and 204B, the relationship between the movement distance of the movable platen 12 (and thus the position of the movable platen 12) and the change patterns of the magnetic flux density. Thus, high working accuracy and mounting accuracy are not required.

Further, the embodiment illustrated in Fig. 5 can be effectively combined with the embodiment illustrated in Fig. 3 describe above. In other words, the position detector 200 according to the embodiment illustrated in Fig. 5 and the position detector 100 according to the embodiment illustrated in Fig. 3 may be provided independently at positions that have an offset in a circumference direction of the center rod 39. However, in this case, the permanent magnet 202 may be shared.

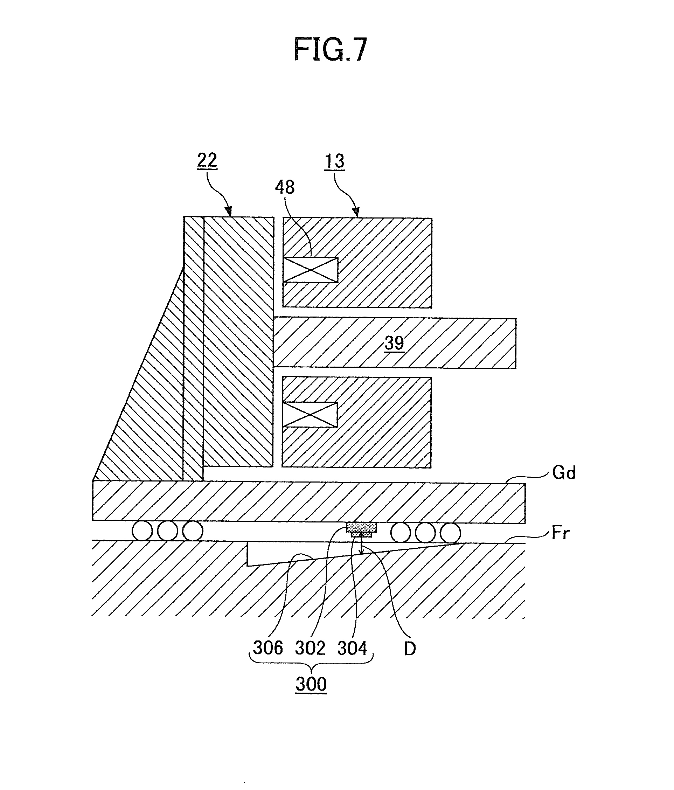

Fig. 7 is a diagram for schematically illustrating a configuration of a position detector 300 according to another embodiment. It is noted that, in Fig. 7, for the sake of convenience for explaining the position detector 300, only a main part of the molding machine illustrated in Figs. 1 and 2 is schematically illustrated. Further, in Figs. 1 and 2, in terms of preventing complexity of the drawings, configurations of the position detector 300 described hereinafter are not illustrated. Fig. 7 illustrates a status (mold closed status) in which the movable platen 12 is at the predetermined forward position.

The position detector 300 according to the embodiment illustrated in Fig. 7 includes a permanent magnet 302, a magnetometric sensor 304 and a sloped surface 306 that is formed on an upper surface of the frame Fr that is formed from a magnetic material. The permanent magnet 302 is provided on the side of the guide Gd such that it is opposed to the frame Fr. The magnetometric sensor 304 is provided on the side of the guide Gd such that the magnetometric sensor 304 is adjacent to the permanent magnet 302. The magnetometric sensor 304 may be of any type, including a Hall sensor, a MR sensor, etc. The sloped surface 306 of the frame Fr has a slope formed therein with respect to the opposing surface on the side of the guide Gd, as illustrated in Fig. 7. In other words, the sloped surface 306 of the frame Fr is configured such that a distance D with respect to the permanent magnet 302 on the opposing surface on the side of the guide Gd varies along a mold opening/closing direction (left and right directions in the drawing). The sloped surface 306 is formed at a position where other components such as the linear motor 28 are not disposed. In other words, the sloped surface 306 is formed at a position that has an offset in a direction normal to the paper surface of the drawing with respect to the linear motor 28, etc.

Because the guide Gd moves at the time of the mold opening and closing operations as described above, the distance D between the sloped surface 306 of the frame Fr and the permanent magnet 302 changes as the guide Gd (and thus the movable platen 12) moves. When the distance D between the sloped surface 306 of the frame Fr and the permanent magnet 302 changes, a magnetic flux density detected by the magnetometric sensor 304 changes correspondingly. In other words, the magnetic flux density detected by the magnetometric sensor 304 changes in a pattern corresponding to a change pattern of the distance D between the sloped surface 306 of the frame Fr and the permanent magnet 302 (see Fig. 4). Thus, by deriving, in advance, a relationship between the movement distance of the movable platen 12 (and thus the position of the movable platen 12) and the change pattern of the magnetic flux density, it becomes possible to detect the position of the movable platen 12.

It is noted that, in the embodiment illustrated in Fig. 7, the permanent magnet 302 and the magnetometric sensor 304 are provided on the side of the guide Gd and the sloped surface 306 is provided on the side of the frame Fr; however, it may be opposite. Specifically, the sloped surface 306 may be provided on the side of the guide Gd and the permanent magnet 302 and the magnetometric sensor 304 may be provided on the side of the frame Fr. Further, the sloped surface 306 of the frame Fr is sloped in a downward direction to the side of the attraction plate 22; however, the direction of the slope may be opposite. Specifically, the sloped surface 306 of the frame Fr may be sloped in an upward direction to the side of the attraction plate 22.

Further, according to the embodiment illustrated in Fig. 7, the sloped surface 306 is formed below the upper surface of the frame Fr (i.e., within the frame Fr); however, the sloped surface 306 may be formed above the upper surface of the frame Fr. For example, the sloped surface 306 may be formed on a member (or a projected portion of the frame Fr) that is attached to the upper surface of the frame Fr.

Further, according to the embodiment illustrated in Fig. 7, the permanent magnet 302 and the magnetometric sensor 304 are provided on the guide Gd near the lower position of the rear platen 13; however, the permanent magnet 302 and the magnetometric sensor 304 may be provided at any position in the guide Gd that are opposed to the sloped surface 306 of the frame Fr. Further, the sloped surface 306 of the frame Fr may be provided near the lower position of the movable platen 12. For example, the sloped surface 306 of the frame Fr may be provided with an offset in the mold opening/closing direction with respect to components related to the linear motor 28.

Further, according to the embodiment illustrated in Fig. 7, a constructive featured portion (i.e., the slope in the illustrated embodiment) of the frame Fr is detected by the magnetometric sensor 304; however, the constructive featured portion of the frame Fr may be detected with any non-contact distance sensors based on other detection principles (an eddy current displacement gauge, a laser displacement gauge, an capacitance type displacement gauge, etc., for example).

According to the embodiment illustrated in Fig. 7, only by performing working or attachment for forming the constructive featured portion (i.e., the sloped surface 306) on the frame Fr, does it become possible to detect the position using the magnetometric sensor 304 which is inexpensive. Further, the magnetometric sensor 304 is easier to mount in comparison with a linear encoder, and the position control can be performed after deriving, based on the change pattern of the magnetic flux density that is actually detected by the mounted magnetometric sensor 304, the relationship between the movement distance of the movable platen 12 (and thus the position of the movable platen 12) and the change pattern of the magnetic flux density. Thus, high working accuracy and mounting accuracy are not required.

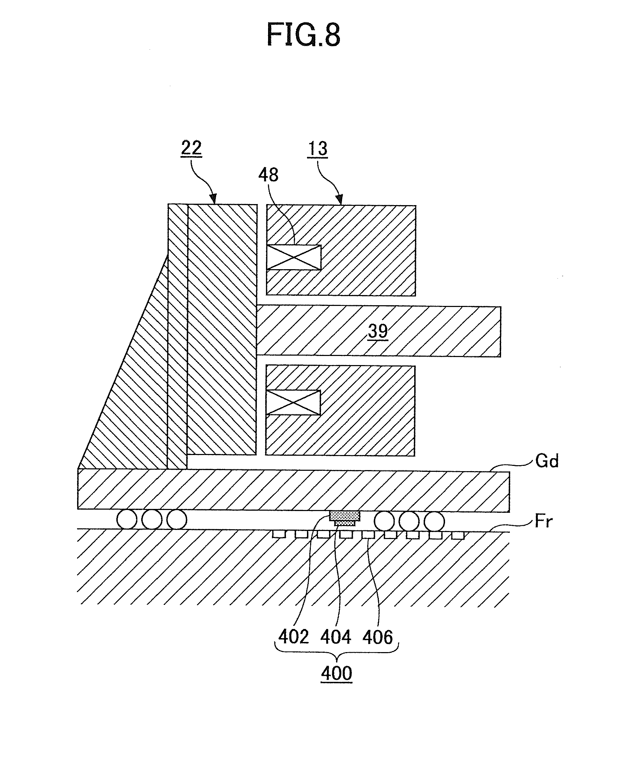

Fig. 8 is a diagram for schematically illustrating a configuration of a position detector 400 according to another embodiment. It is noted that, in Fig. 8, for the sake of convenience for explaining the position detector 400, only a main part of the molding machine illustrated in Figs. 1 and 2 is schematically illustrated. Further, in Figs. 1 and 2, in terms of preventing complexity of the drawings, configurations of the position detector 400 described hereinafter are not illustrated. Fig. 8 illustrates a status (mold closed status) in which the movable platen 12 is at the predetermined forward position.

The position detector 400 according to the embodiment illustrated in Fig. 8 includes a permanent magnet 402, a magnetometric sensor 404 and a recess row 406 that is formed on an upper surface of the frame Fr that is formed from a magnetic material. The permanent magnet 402 is provided on the side of the guide Gd such that it is opposed to the frame Fr. The magnetometric sensor 404 is provided on the side of the guide Gd such that the magnetometric sensor 402 is adjacent to the permanent magnet 402. The magnetometric sensor 404 may be of any type, including a Hall sensor, a MR sensor, etc. The recess row 406 of the frame Fr is configured by a plurality of recesses spaced uniformly (uniform pitch) along the mold opening/closing direction (left and right directions in the drawing), as illustrated in Fig. 8. There may be two recess rows 406, as is the case with the embodiment illustrated in Fig. 5. In this case, another magnetometric sensor 404 is provided accordingly. Further, in this case, these two recess rows 406 may be formed such that there is a phase shift with respect to each other along the mold opening/closing direction, as is the case with the embodiment illustrated in (B) in Fig. 5. The phase shift amount may be asymmetrical with respect to spacing (pitch) between the respective recesses of the recess row 406, for example. The phase shift amount may be other than a half of the pitch, such as a quarter of the pitch, for example. The recess row 406 is formed at a position where other components such as the linear motor 28 are not disposed. In other words, the recess row 406 is formed at a position that has an offset in a direction normal to a paper surface of the drawing with respect to the linear motor 28, etc.

Because the guide Gd moves at the time of the mold opening and closing operations as described above, the distance D between the upper surface of the frame Fr and the permanent magnet 402 due to the recess row 406 changes as the guide Gd (and thus the movable platen 12) moves. For example, if a single pair of a projection and a depression (a depression and a projection next to it in the recess row 406, for example) passes by the magnetometric sensor 404, a single sine wave form is appeared in the output of the magnetometric sensor 404 (see Fig. 6). Further, if two recess rows 406 are arranged with a phase shift, the outputs of the corresponding two magnetometric sensors 404 become phase shifted sine waves, which enables determining the direction of travel (forward or backward) of the movable platen 12.

It is noted that, in the embodiment illustrated in Fig. 8, the permanent magnet 402 and the magnetometric sensor 404 are provided on the side of the guide Gd and the recess row 406 is provided on the side of the frame Fr; however, it may be opposite. Specifically, the recess row 406 may be provided on the side of the guide Gd and the permanent magnet 402 and the magnetometric sensor 404 may be provided on the side of the frame Fr.

Further, according to the embodiment illustrated in Fig. 8, the recess row 406 is formed below the upper surface of the frame Fr (i.e., within the frame Fr); however, the recess row 406 may be formed above the upper surface of the frame Fr. For example, the recess row 406 may be formed on a member (or a projected portion of the frame Fr) that is attached to the upper surface of the frame Fr. Further, a channel may be formed in the frame Fr and a magnetic material member having the recess row 406 formed therein may be provided in the channel.

Further, according to the embodiment illustrated in Fig. 8, the permanent magnet 402 and the magnetometric sensor 404 are provided on the guide Gd near the lower end of the rear platen 13; however, the permanent magnet 402 and the magnetometric sensor 404 may be provided at any positions in the guide Gd that are opposed to the recess row 406 of the frame Fr. Further, the recess row 406 of the frame Fr may be provided near the near the lower position of the movable platen 12. For example, the recess row 406 of the frame Fr may be provided with an offset in the mold opening/closing direction with respect to components related to the linear motor 28.

Further, according to the embodiment illustrated in Fig. 8, a constructive featured portion (i.e., the projection and the depression in the illustrated embodiment) of the frame Fr is detected by the magnetometric sensor 404; however, the constructive featured portion of the frame Fr may be detected with any non-contact distance sensors based on other detection principles (an eddy current displacement gauge, a laser displacement gauge, an capacitance type displacement gauge, etc., for example).

According to the embodiment illustrated in Fig. 8, only by performing working or attachment for forming the constructive featured portion (i.e., the recess row 406) on the upper surface of the frame Fr, does it become possible to detect the position using the magnetometric sensor 404 which is inexpensive. Further, the magnetometric sensor 404 is easier to mount in comparison with a linear encoder, and the position control can be performed after deriving, based on the change pattern of the magnetic flux density that is actually detected by the mounted magnetometric sensor 104, the relationship between the movement distance of the movable platen 12 (and thus the position of the movable platen 12) and the change pattern of the magnetic flux density. Thus, high working accuracy and mounting accuracy are not required.

Further, the embodiment illustrated in Fig. 8 can be effectively combined with the embodiment illustrated in Fig. 7 describe above. In other words, the position detector 400 according to the embodiment illustrated in Fig. 8 and the position detector 300 according to the embodiment illustrated in Fig. 7 may be provided independently at positions that have an offset in a machine cross direction (a direction normal to the paper surface of the drawing). For example, the position detectors 300 and 400 may be provided independently on the opposite sides of the frame Fr in the machine cross direction. However, in this case, the permanent magnet 402 may be shared.

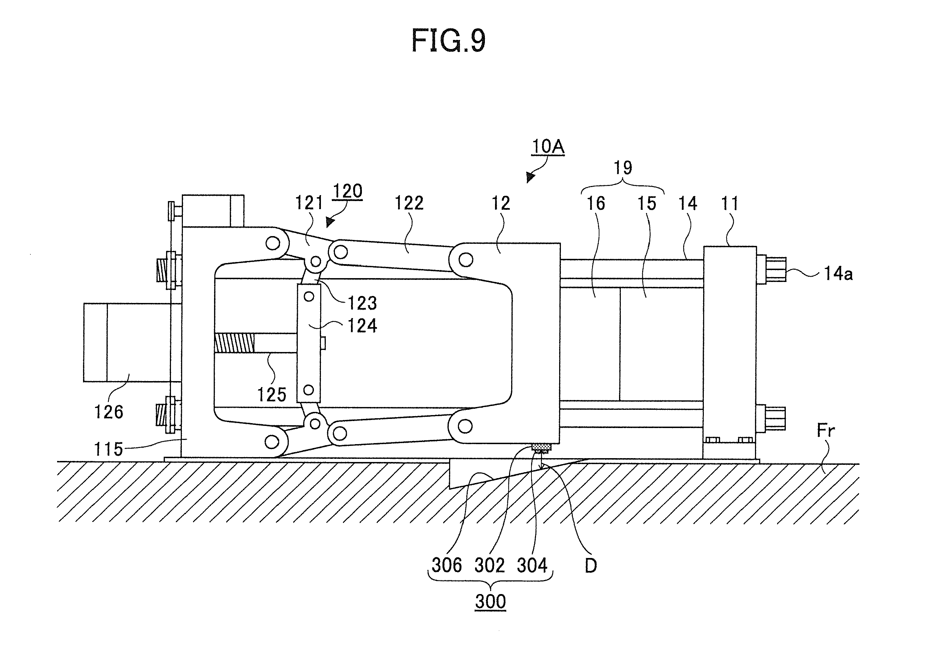

Fig. 9 is a diagram for illustrating another example of a mold unit and a mold clamping unit in a molding machine according to an embodiment of the present invention. The mold clamping unit 10A uses a toggle mechanism to perform the mold opening and closing operations. Components which may be the same as those in the mold clamping unit 10 illustrated in Fig. 1, etc., are given the same reference numerals and an explanation thereof is omitted.

A toggle support 115 is provided such that it is away from the stationary platen 11 by a predetermined distance and movable with respect to the frame Fr. Tie bars 14 are provided between the stationary platen 11 and the toggle support 115. A toggle mechanism 120 is mounted between the movable platen 12 and the toggle support 115. A clamping motor 126 for driving the toggle mechanism 120 is provided on the rear end of the toggle support 115. The clamping motor 126 includes a motion direction converting mechanism (not illustrated) including a ball screw mechanism, etc., for converting a rotational motion into a reciprocating motion. The toggle mechanism 120 can be operated by moving a drive axis 125 in forward and backward directions (i.e., left and right directions in the drawing). It is noted that the toggle mechanism 120 may be driven with a hydraulic pressure.

The toggle mechanism 120 includes a cross head 124 which is attached to the drive axis 125, second toggle levers 123 which are pivotably attached to the cross head 124, first toggle levers 121 which are pivotably attached to the toggle support 115, and toggle arms 122 which are pivotably attached to the movable platen 12. The first toggle levers 121 and the second toggle levers 123 are pivotably connected to each other, and the first toggle levers 121 and the toggle arms 122 are pivotably connected to each other with a link mechanism. It is noted that in the illustrated embodiment the toggle mechanism 120 is a so-called "internal five node double toggle mechanism" which has a symmetrical configuration in up and down directions; however, the configuration of the toggle mechanism 120 is arbitrary.

The toggle mechanism 120 can be operated by driving the clamping motor 126 to move the cross head 124 in forward and backward directions. In this case, when the cross head 124 is moved in the forward direction (i.e., the right direction in the drawing), the movable platen 12 is moved in the forward direction, thereby the mold closing is performed. Then, the mold clamping force, which is derived by multiplying a propulsion force from the clamping motor 126 by a toggle multiplying factor, is generated, and the mold closing is performed with the generated mold clamping force.

The toggle support 115 has tie bar passing holes (not illustrated), four holes, for example, formed therein, and the tie bars 14 have the left end in the drawing which pass through the corresponding tie bar passing holes. It is noted that the right end (not illustrated) of the tie bars 14 is fixed to the stationary platen 11 by means of nuts 14a. Further, a plurality of notches or holes (not illustrated), four notches or holes, for example, are formed at four corners of the movable platen 12 and the tie bars 14 are inserted to pass through the notches or holes.

The molding machine includes the position detector 300 as described in Fig. 7, as illustrated in Fig. 9. The position detector 300 includes the permanent magnet 302, the magnetometric sensor 304 and the sloped surface 306 that is formed on an upper surface of the frame Fr that is formed from the magnetic material. The permanent magnet 302 is provided on the side of the movable platen 12 such that it is opposed to the frame Fr. The magnetometric sensor 304 is provided on the side of the movable platen 12 such that the magnetometric sensor 304 is adjacent to the permanent magnet 302. The magnetometric sensor 304 may be of any type, including a Hall sensor, a MR sensor, etc. The sloped surface 306 of the frame Fr has a slope formed therein with respect to the opposing surface of the movable platen 12, as illustrated in Fig. 9. In other words, the sloped surface 306 of the frame Fr is configured such that a distance D with respect to the permanent magnet 302 on the opposing surface on the side of the movable platen 12 varies along a mold opening/closing direction (left and right directions in the drawing). The sloped surface 306 is formed at a position where other components such as a guide are not disposed. In other words, the sloped surface 306 is formed at a position that has an offset in a direction normal to a paper surface of the drawing with respect to the guide, etc. Various possible variants of the position detector 300 are as described above.

According to the embodiment illustrated in Fig. 9, only by performing working or attachment for forming the constructive featured portion (i.e., the sloped surface 306) on the frame Fr, does it become possible to detect the position using the magnetometric sensor 304 which is inexpensive. Further, the magnetometric sensor 304 is easier to mount in comparison with a linear encoder, and it is possible to derive, based on the change pattern of the magnetic flux density that is actually detected by the mounted magnetometric sensor 304, the relationship between the movement distance of the movable platen 12 (and thus the position of the movable platen 12) and the change pattern of the magnetic flux density, so that the position control can be performed based on the derived relationship during the actual operation.

It is noted that, in the illustrated embodiment, the molding machine includes the position detector 300; however, the molding machine may include another position detector 100, 200 or 400 described above. In the case where the molding machine includes the position detector 100 described above with reference to Fig. 3, etc., the periphery surface portion 39a may be formed on the side of the tie bars 14, and the permanent magnet 302 and the magnetometric sensor 104 may be provided on the side of the movable platen 12 (notches or holes at the four corners, for example) such that they are opposed to the periphery surface portion 39a. In the case where the molding machine includes the position detector 200 described above with reference to Fig. 5, etc., the recess rows 39b and 39c may be formed on the side of the tie bars 14, and the permanent magnet 202 and the magnetometric sensors 204A and 204B may be provided on the side of the movable platen 12 (notches or holes at the four corners, for example) such that they are opposed to the recess rows 39b and 39c. In the case where the molding machine includes the position detector 400 described above with reference to Fig. 8, etc., instead of the sloped surface 306 of the frame Fr, the recess row 406 may be formed on the upper surface of the frame Fr that is formed from the magnetic material. Various possible variants of the position detectors 100, 200 and 400 are as described above.

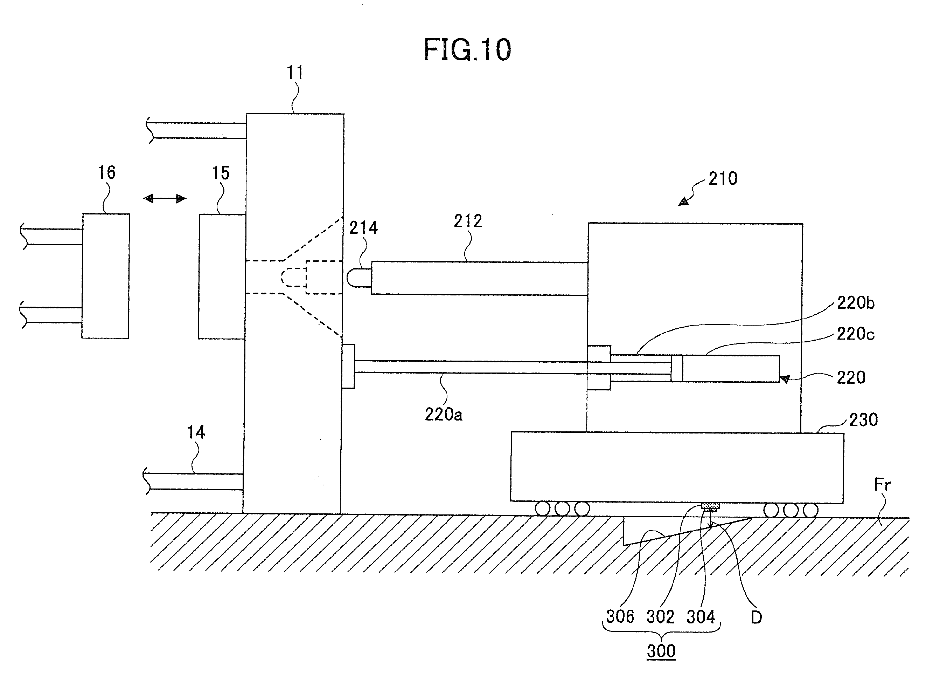

Fig. 10 is a diagram for illustrating another example of a mold unit and an injection unit in a molding machine according to an embodiment of the present invention. Components which may be the same as those illustrated in Fig. 1, etc., are given the same reference numerals and an explanation thereof is omitted. Further, in Fig. 10, an illustration of the mold clamping unit is omitted.

An injection unit movement unit is provided to move an injection unit 210 in the molding machine. The injection unit 210 is supported on the frame Fr of the molding machine via a movable guide 230 such that the injection unit 210 is movable with respect to the stationary platen 11. The movable mold 16 is provided such that it is movable with respect to the stationary mold 15, as is the case with the embodiment described above. The movable mold 16 is pressed against the stationary mold 15 and in the mold closed status a resin filling process and a hold pressure process are performed. Then, the movable mold 16 is moved away from the stationary mold 15 and in the mold opened status a molded article take-out process and a plasticizing process are performed.

The injection unit 210 includes a screw 212 for plasticizing and pushing forward a molten resin, and a nozzle 214 is provided at the end of the screw 212. The molten resin is ejected from the tip of the nozzle 214. In a filling process for filling the molten resin into the mold, the injection unit 210 is moved toward the stationary platen 11, and the nozzle 214 is pressed against an injection port of the stationary mold 15 or the stationary platen 11 (nozzle contact).

The injection unit movement unit is a mechanism for moving the injection unit 210. The injection unit movement unit includes a hydraulic cylinder 220 and a hydraulic circuit (not illustrated) for supplying a hydraulic fluid as a working medium to the hydraulic cylinder 220. The end of a shaft 220a of the hydraulic cylinder 220 is secured to the stationary platen 11. Supplying the hydraulic fluid to the front side of the hydraulic cylinder 220 causes the movable guide 230 (and thus the injection unit 210 as a whole supported by the movable guide 230) to move toward the stationary platen 11 (i.e., the mold). On the other hand, supplying the hydraulic fluid to the back side of the hydraulic cylinder 220 causes the movable guide 230 (and thus the injection unit 210 as a whole supported by the movable guide 230) to move away from the stationary platen 11 (i.e., the mold).

The molding machine includes the position detector 300 as described in Fig. 7, as illustrated in Fig. 10. The position detector 300 includes the permanent magnet 302, the magnetometric sensor 304 and the sloped surface 306 that is formed on an upper surface of the frame Fr that is formed from the magnetic material. The permanent magnet 302 is provided on the side of the movable guide 230 such that it is opposed to the frame Fr. The magnetometric sensor 304 is provided on the side of the movable guide 230 such that the magnetometric sensor 304 is adjacent to the permanent magnet 302. The magnetometric sensor 304 may be of any type, including a Hall sensor, a MR sensor, etc. The sloped surface 306 of the frame Fr has a slope formed therein with respect to the opposing surface on the side of the movable guide 230, as illustrated in Fig. 10. In other words, the sloped surface 306 of the frame Fr is configured such that a distance D with respect to the permanent magnet 302 on the opposing surface on the side of the movable guide 230 varies along an injection unit movement direction (left and right directions in the drawing). Various possible variants of the position detector 300 are as described above.

According to the embodiment illustrated in Fig. 10, only by performing working or attachment for forming the constructive featured portion (i.e., the sloped surface 306) on the frame Fr, does it become possible to detect the position using the magnetometric sensor 304 which is inexpensive. Further, the magnetometric sensor 304 is easier to mount in comparison with a linear encoder, and it is possible to derive, based on the change pattern of the magnetic flux density that is actually detected by the mounted magnetometric sensor 304, the relationship between the movement distance of the movable guide 230 (and thus the position of the nozzle 214) and the change pattern of the magnetic flux density, so that the position control can be performed based on the derived relationship during the actual operation.

It is noted that, in the illustrated embodiment, the molding machine includes the position detector 300; however, the molding machine may include the position detector 400 described above with reference to Fig. 8. In this case, instead of the sloped surface 306 of the frame Fr, the recess row 406 may be formed on the upper surface of the frame Fr that is formed from the magnetic material. Various possible variants of the position detector 400 are as described above.

The present invention is disclosed with reference to the preferred embodiments. However, it should be understood that the present invention is not limited to the above-described embodiments, and variations and modifications may be made without departing from the scope of the present invention.

For example, according to the embodiments, a combination of a movable member which is moved at the time of the mold opening and closing operations and a stationary member corresponds to a combination of the center rod 39 and the rear platen 13 (Fig. 3 and Fig. 5), and a combination of the guide Gd and the frame Fr (Fig. 7 and Fig. 8); however, the present invention can be applied to any other combinations (a combination of the movable platen 12 and the tie bar 14, for example). Further, the present invention can be applied to a combination of an arbitrary movable member and an arbitrary stationary member in the overall molding machine.

Further, according to the embodiments, the magnetometric sensor and the permanent magnet (the permanent magnet 102 and the magnetometric sensor 104 in the case of the position detector 100 illustrated in Fig. 3, for example) are used as a set; however, the permanent magnet may be omitted if the magnetometric sensor has a function of generating the magnetic flux. Further, an electromagnet may be used instead of the permanent magnet.

The present application is based on Japanese Patent Application No. 2011-050791, filed on March 8, 2011, the entire contents of which are hereby incorporated by reference.

## Claims

1. A molding machine, comprising:
a fixed member and a movable member that move relatively in a predetermined direction;
a constructive featured portion that is formed on one of the fixed member and the movable member and in a predetermined pattern in the predetermined direction;
a detector that is provided on another one of the fixed member and the movable member and detects the predetermined pattern of the constructive featured portion; and
a position detector that detects a position of the movable member based on the predetermined pattern detected by the detector.

2. The molding machine of claim 1, further comprising a mold clamping unit that performs mold opening and closing operations, wherein
the fixed member and the movable member move relatively in the predetermined direction at the time of the mold opening and closing operations, the predetermined direction corresponding to a direction in which the mold is opened and closed, and
the position detector detects, based on the predetermined pattern detected by the detector, the position of the movable member during the mold opening and closing operations.

3. The molding machine of claim 2, wherein the mold clamping unit uses a linear motor or a toggle mechanism for the mold opening and closing operations.

4. The molding machine of claim 2, wherein the mold clamping unit uses a linear motor for the mold opening and closing operations, and
the molding machine further comprising: a controller that controls, based on the predetermined pattern detected by the detector, the position of the movable member during the mold opening and closing operations.

5. The molding machine of claim 1, further comprising:
an injection unit, wherein
the fixed member and the movable member move relatively in the predetermined direction when the injection unit is moved with respect to a stationary mold, and
the position detector detects, based on the predetermined pattern detected by the detector, the position of the movable member during a movement of the injection unit.
